# FASCICULE DE BREVET EUROPEEN

(11) **EP 1 356 735 B1**
(45) Date de publication et mention de la délivrance du brevet: **19.01.2005**
(21) Numéro de dépôt: 02076610.1
(22) Date de dépôt: 23.04.2002
(51) Int. Cl.: A21D 13/08, A23G 9/02, A23G 9/20, A23G 9/28

(54) **Biscuit extrudable à température négative, procédé de préparation et utilisation dans des produits de confiserie glacée composites**
Biskuitmasse welche extrudierbar ist bei negativen Temperaturen, Herstellungsverfahren der Biskuitmasse und Verwendung der Biskuitmasse in Komposit-Eiskonfekte
Biscuit extrudable at negative temperatures, process for its preparation and use thereof in composite frozen confectionery products

(43) Date de publication de la demande: 29.10.2003
(73) Titulaire: SOCIETE DES PRODUITS NESTLE S.A., 1800 Vevey (CH)
(72) Inventeur: Dufort, Christian, 60000 Beauvais (FR)
(74) Mandataire: Archambault, Jean

(56) Documents cités:
- EP-A- 0 392 495
- EP-A- 0 553 389
- EP-A- 0 710 448
- EP-A- 0 954 977
- FR-A- 2 589 680
- US-A- 4 311 716
- US-A- 4 650 685

## Description

L'invention concerne le domaine de la biscuiterie et plus particulièrement le domaine de la biscuiterie adaptée aux confiseries glacées composites dans lesquelles une masse de confiserie glacée est associée à un biscuit.

De nombreux produits de type confiserie glacée comprenant du biscuit existent.
Il peut s'agir par exemple de gâteaux glacés comprenant une alternance de couches de confiserie glacée, c'est à dire de crème glacée ou de sorbet et de biscuit.

Le biscuit utilisé peut être un biscuit relativement sec, friable et croustillant de type petit beurre ou sablé, qualifié de biscuit à pâte dure ou du genre gaufrette, fabriqué à partir de pâte liquide. Ces types de biscuit présentent une bonne croustillance et peuvent être formés facilement. Après assemblage de la confiserie glacée et du biscuit, le produit est conservé à l'état congelé. Cependant, lors de l'entreposage et de la distribution, le biscuit présente une tendance à la reprise d'humidité, tant depuis la confiserie glacée que depuis l'environnement extérieur. Cette reprise d'humidité est dommageable aux qualités organoleptiques du biscuit, ce dernier devenant mou.

On connait une autre forme de pâtisserie associée à la confiserie glacée, le biscuit à pâte molle, spongieuse, aérée et souple dite "génoise". Un tel biscuit est généralement préparé à partir d'une pâte liquide coulée dans des moules plats, cuite et ensuite découpée, puis refroidie pour constituer les fonds de gâteaux glacés. L'intérêt de tels types de biscuit est d'être compatible avec la crème glacée, dans la mesure où il est peu sensible à la reprise d'humidité à l'entrreposage à l'état congelé. Le principal inconvénient lié à l'utilisation de ce type de biscuit est sa difficulté de manipulation: il ne peut pas être formé et être extrudé, en particulier en même temps que la confiserie glacée.

Un gâteau glacé de ce dernier type est décrit par exemple dans EP-A-40349, relatif à la fabrication d'un gâteau glacé de type omelette norvégienne consistant en une couche rectangulaire de génoise préparée séparément servant de support, qui est surmontée d'un coeur de glace vanille, le coeur étant lui-même entouré d'un décor de blancs d'oeuf meringués.

FR-A-2 589 680 enseigne un procédé de fabrication de biscuits diététiques, caractérisé en ce qu'il consiste à fouetter vigoureusement ensemble et en milieu aqueux ceux qui, parmi les composants d'une composition de biscuit diététique renfermant au moins 40 % de protéines, ont un pouvoir moussant, à incorporer délicatement dans la mousse ainsi obtenue les composants complémentaires n'ayant que peu ou pas de pouvoir moussant, puis à mouler et à cuire le mélange résultant en biscuits individuels.

Le but de l'invention est de mettre à disposition une matière première pâtissière à base de biscuit souple qui soit extrudable à température négative, qui lorsqu'il est utilisé en association avec la confiserie glacée pour confectionner des produits de confiserie glacée composites, permette la réalisation à cadence industrielle de produits composites présentant un aspect visuel attractif allié à un effet de texture contrastant avec la confiserie glacée.

A cet effet l'invention concerne un biscuit reconstitué extrudable à température négative caractérisé par le fait qu'il comprend:
Des morceaux de biscuit cuit de type sec ou à pâte molle, ayant été préalablement congelés et
Un liant de dispersion des dits morceaux de biscuit sous forme d'une meringue foisonnée comprenant une protéine foisonnante choisie parmi le blanc d'oeuf et les substituts de blanc d'oeuf d'origine laitière et des hydrates de carbone, glacé à une température négative allant de -3°C à -8° C et
Que le mélange des morceaux de biscuit et du liant de dispersion a un foisonnement de 80 à 150 %.

Par l'expression "morceaux de biscuit", on entend qu'il s'agit de particules de biscuit cuit sec ou de préférence à pâte molle obtenues après découpage d'une masse de génoise congelée en cubes, par exemple. Les dites particules peuvent êtres inscrites dans une sphère. La distribution statistique des particules est telle qu'environ au moins 60 % de ces particules présentent un diamètre moyen de la sphère où elles s'inscrivent compris entre 1 et 4 mm, et de préférence environ au moins 90 % de celles-ci présentent un diamère moyen de sphère compris entre 1 et 3 mm.

Les hydrates de carbone entrant dans la composition du liant de dispersion peuvent être choisis dans le groupe constitué par le saccharose, la maltodextrine et le sirop de glucose, utilisés de préférence en mélange. Ainsi, le liant peut comprendre environ de 20 à 30 % en poids de saccharose et environ 8 à 15 % en poids de sirop de glucose par rapport au poids total humide, par exemple.

Le liant de dispersion contient une protéine foisonnante qui peut être du blanc d'oeuf ou une protéine laitière, par exemple un isolat de protéine de lactosérum, riche en alpha-lactalbumine ou une protéine laitière partiellement hydrolysée à base de caséinate. Pour obtenir l'effet foisonné désiré on utilise de préférence environ 1 à 5 % en poids de protéine d'oeuf ou laitière par rapport au poids total humide du liant, par exemple.

Le liant peut également contenir un agent texturant, épaississant ou gélifiant comme la gélatine, une gomme ou un mélange de gomme, de carraghénanne et d'amidon en tant que substitut de gélatine, par exemple. L'agent texturant est utilisé de préférence à raison de 0,5 à 2 % en poids, par rapport au poids total humide du liant.

Enfin, le liant peut contenir un agent aromatisant utilisé classiquement en biscuiterie, de la poudre de cacao, d'épices ou de fruits secs, par exemple.

Le biscuit reconstitué extrudable selon l'invention présente un certain nombre d'avantages spécifiques:
Il a une texture souple, non cassante,
Il peut être mis en forme ou dosé de la même manière que la confiserie glacée extrudée,
Il adhère parfaitement à la confiserie glacée,
Il peut être fabriqué à cadence industrielle,
Le liant de dispersion peut être congelé et foisonné dans un freezer, c'est à dire avec le même équipement que la confiserie glacée.

La présente invention concerne également une confiserie glacée composite comprenant un biscuit selon l'invention ainsi qu'une masse de confiserie glacée en contact avec ce biscuit.

Par l'expression "masse de confiserie glacée" on entend principalement une composition glacée à base de produit laitier telle qu'une crème glacée proprement dite ou un sorbet extrudé. Cette masse de confiserie glacée est généralement foisonnée à 80 - 120 % en volume. Cette masse de confiserie glacée peut être constituée d'une crème glacée ou d'un sorbet ou de plusieurs crèmes glacées ou sorbets de parfums différents et peut contenir des inclusions, par exemple de sauce, de sirop, de composition grasse, par exemple de chocolat en petits morceaux, en feuillets ou en copeaux ou de petits morceaux de fruits secs ou confits, par exemple.

L'assemblage du biscuit avec la confiserie glacée peut être réalisé par co-extrusion ou par extrusion successive de couches ou de zones de biscuit et de confiserie glacée. Du fait que la masse de biscuit a des propriétés de plasticité semblable à celles de la confiserie glacée, le biscuit peut être aisément mis dans toutes les formes qui sont réalisables pour la confiserie glacée extrudée.

On peut réaliser par exemple des articles composites du genre des bâtonnets glacés ou des barres ou encore des portions en forme de tranches composites de type "cassata" ou de domes par exemple. Dans ces articles, le biscuit peut constituer le coeur ou l'enrobage.

On peut réaliser par exemple des gâteaux constitués de couches superposées alternées de biscuit et de confiserie glacée.

La masse de biscuit peut par exemple être extrudée en continu sous forme de couche de base sur un tapis transporteur en défilement et la ou les masses de confiserie glacée extrudée sous forme de boudin sur le biscuit pour constituer un assemblage et l'assemblage peut être ensuite découpé en portions.

Le gâteau peut présenter sur sa face supérieure et/ou sur ses flancs des éléments décoratifs attractifs, qui peuvent être constitués par exemple d'annexes ou être sous forme d'enrobage, de bandes, de lignes ondulées ou de damier en composition grasse, par exemple en chocolat ou en couverture ou en composition sucrée pour glaçage, aromatisée et colorée conférant un contraste visuel et gustatif avec la masse de confiserie glacée. La décoration peut avoir lieu sur la bande assemblé continue en même temps que l'extrusion avant découpe des portions ou sur les portions découpées.

Grâce à la formulation de la masse de biscuit selon l'invention, la confiserie glacée obtenue présente l'avantage d'un contraste de texture entre le crémeux et le fondant de la masse de confiserie glacée et le moelleux du biscuit et ceci même après un entreposage prolongé à température de congélation, c'est à dire à température inférieure à - 10° C, préférentiellement inférieure à -18° C.

L'invention concerne également un procédé de fabrication du biscuit reconstitué précédent dans lequel:
On mélange dans de l'eau successivement ou ensemble les agents de texture, les hydrates de carbone que l'on chauffe jusqu'à dissolution et que l'on pasteurise,
On ajoute au mélange précédent une protéine foisonnante, et dans le cas d'une protéine foisonnante d'origine laitière, cette adjonction peut être réalisée avant la pasteurisation, de manière à réaliser un liant de dispersion,
On congèle et on foisonne le liant de dispersion dans un freezer et
On incorpore au liant congelé et foisonné une masse de biscuit sec ou à pâte molle refroidie et découpée en morceaux.

Les exemples ci-après illustrent l'invention. Dans ces exemples, les parties et pourcentages sont pondéraux, sauf indication contraire.

### Exemple 1: Fabrication d'un biscuit contenant du blanc d'oeuf et d'un gâteau glacé composite

### Préparation du meringage

On utilise les ingrédients indiqués dans les proportions indiquées ci-après:

| Ingrédient | % |
|---|---|
| Saccharose cristallisé | 27,6 |
| Sirop de glucose deshydraté (DE: 36- 40) | 10 |
| Arôme de vanille | 0,18 |
| Gélatine (bloom 210-230) | 1,2 |
| Blanc d'oeuf en poudre | 3,5 |
| Eau | Complément à 100 |
| DE: dextrose équivalent | |

On chauffe de l'eau dans une cuve munie d'un agitateur et d'une double enveloppe à 70° C, puis on y dissout la gélatine prémélangée à 4 fois son poids de saccharose cristallisé et on agite le mélange jusqu'à dissolution complète. On ajoute alors au mélange le reste du saccharose et le sirop de glucose déshydraté sous agitation. On monte la température du mélange à 85° C et on maintient cette température pendant 5 min. On refroidit ensuite le mélange à 40° C.
On ajoute à cette température le blanc d'oeuf en poudre, sous agitation lente jusqu'à dissolution complète. On refroidit ensuite à 10° C. Au moment de l'utilisation, on congèle le mix et on le foisonne à 175 % en volume dans un freezer. A la sortie du freezer, la composition pour meringage est à - 5° C.

### Préparation du biscuit extrudé

On découpe un biscuit génoise en cubes de 10 mm d'arête dans une machine URSCHEL et on congèle les morceaux. On distribue les morceaux de génoise congelés à l'aire d'une vis doseuse DOSAPRO dans le flux de la composition de meringage provenant du freezer et on mélange l'ensemble des morceaux et de la composition de meringage dans la vis mélangeuse d'un "ingredient feeder", le mélange se faisant verticalement de bas en haut et étant conduit vers un tube relié à un extrudeur à buse plate.

### Fabrication du gâteau

A partir du biscuit précédent et d'une masse de crème glacée foisonnée à 100 % en volume, glacée en freezer à une température de sortie de - 5° C et de composition ci-après:

| Ingrédient | % |
|---|---|
| Poudre de lait | 10 |
| Emulsifiant (CREMODAN®) | 0,5 |
| Arôme vanille | 0,5 |
| Graisse végétale hydrogénée | 8 |
| Saccharose | 14 |
| Sirop de glucose | 4 |
| Eau | Complément à 100 |

on fabrique un gâteau glacé. Pour ce faire, la buse plate est montée fixe au dessus d'un tapis transporteur en défilement continu, parallélement au tapis, sur lequel on dépose un ruban de biscuit par extrusion à partir de cette buse. On dépose ensuite sur le biscuit une masse de crème glacée sous forme de ruban enroulé décoratif par l'intermédiaire d'un extrudeur à joint tournant muni d'une buse plate terminée par un ajutage de sortie en forme de fente symétrique par rapport à l'axe de rotation de la buse. De cette manière, en réglant la vitesse de rotation de la buse mobile et la vitesse de défilement du tapis on obtient un ruban plissé enroulé sur lui-même. On découpe enfin le ruban composite en portions qui constituent le gâteau. Les portions sont placées en tunnel de durcissement, emballées et entreposées à température < -18° C.

### Exemple 2: Fabrication d'un biscuit contenant des protéines laitières et d'un gâteau glacé composite

### Préparation du meringage chocolat

On utilise les ingrédients indiqués dans les proportions indiquées ci-après:

| Ingrédient | % |
|---|---|
| Saccharose cristallisé | 21,7 |
| Sirop de glucose deshydraté (DE: 40) | 16 |
| Maltodextrine (DE: 8-10) | 3 |
| Sel fin | 0,05 |
| Protéines laitières foisonnantes de type caséinate de calcium (BV 50, DMV International) | 1,2 |
| Cacao dégraissé en poudre (10-12 % de matière grasse) | 3 |
| Gomme xanthane (Rhodigel easy Z) + amidon instantané | 1,47 |
| Iota carragheenane | 0,33 |
| Emulsifiant mono-diglycéride (CREMODAN 60VEG) | 0,2 |
| Eau | Complément à 100 |
| DE: dextrose équivalent | |

On mélange dans l'eau froide la gomme xanthane et l'amidon, puis on chauffe le mélange dans une cuve munie d'un agitateur et d'une double enveloppe à 65° C, puis on y dissout un prémélange contenant le saccharose cristallisé, la maltodextrine, le sel fin, le sirop de glucose, le iota carragheenane, la poudre de cacao et l'émulsifiant jusqu'à dissolution complète sous forte agitation. On ajoute alors au mélange à cette température les protéines laitières en poudre, sous agitation lente jusqu'à obtenir une bonne dispersion. On monte la température du mélange à 85° C et on maintient cette température pendant 5 min. pour le pasteuriser. On refroidit ensuite à 10° C. Au moment de l'utilisation, on congèle le mix et on le foisonne à 180 % en volume dans un freezer. A la sortie du freezer, la composition pour meringage est à - 5° C.

### Préparation du biscuit extrudé

On découpe un biscuit génoise en cubes de 10 mm d'arête dans une machine URSCHEL et on congèle les morceaux. On distribue les morceaux de génoise congelés directement dans la veine glacée de la composition de meringage provenant du freezer par la vis mélangeuse d'un "ingredient feeder", le mélange se faisant verticalement de bas en haut et étant conduit vers un tube relié à un extrudeur à buse plate. Le biscuit a un foisonnement de 130 % en volume.

### Fabrication du gâteau

A partir du biscuit précédent et d'une masse de crème glacée foisonnée à 100 % en volume, glacée en freezer à une température de sortie de - 5° C et de composition ci-après:

| Ingrédient | % |
|---|---|
| Poudre de lait | 10 |
| Emulsifiant (CREMODAN®) | 0,5 |
| Arôme vanille | 0,5 |
| Graisse végétale hydrogénée | 8 |
| Saccharose | 14 |
| Sirop de glucose | 4 |
| Eau | Complément à 100 |

on fabrique un gâteau glacé. Pour ce faire, la buse plate est montée au dessus d'un tapis transporteur sur lequel on dépose un ruban de biscuit par extrusion à partir de cette buse. On dépose ensuite sur le biscuit une masse de crème glacée sous forme de ruban plat par une buse plate et on renouvelle ces dépôts successifs pour obtenir une bande comprenant trois couches de biscuit et deux couches de crème glacée entre les couches de biscuit. On découpe le ruban composite ainsi obtenu en portions et on enrobe les portions avec une couverture de chocolat, ce qui constitue le gâteau.

## Revendications

1. Biscuit reconstitué extrudable à température négative, **caractérisé par le fait qu'**il comprend:
Des morceaux de biscuit cuit de type sec ou à pâte molle, ayant été préalablement congelés et
Un liant de dispersion des dits morceaux de biscuit sous forme d'une meringue foisonnée comprenant une protéine foisonnante choisie parmi le blanc d'oeuf et les substituts de blanc d'oeuf d'origine laitière et des hydrates de carbone, glacé à une température négative allant de -3° C à -8° C et
Que le mélange des morceaux de biscuit et du liant de dispersion a un foisonnement de 80 à 150 %.

2. Biscuit selon la revendication 1, dans lequel les morceaux de biscuit sont des particules dont la distribution statistique est telle qu'environ au moins 60 % de ces particules présentent un diamètre moyen de la sphère où elles s'inscrivent compris entre 1 et 4 mm, et de préférence au moins 90 % de celles-ci présentent un diamètre moyen de sphère compris entre 1 et 3 mm.

3. Biscuit selon la revendication 1, dans lequel les hydrates de carbone entrant dans la composition du liant de dispersion sont choisis dans le groupe constitué par le saccharose, la maltodextrine et le sirop de glucose, utilisés de préférence en mélange.

4. Biscuit selon la revendication 3, dans lequel le liant comprend de 20 à 30 % en poids de saccharose et environ 8 à 15 % en poids de sirop de glucose par rapport au poids total humide.

5. Biscuit selon la revendication 1, dans lequel le liant de dispersion contient une protéine foisonnante, choisie parmi un isolat de protéine de lactosérum, riche en alpha-lactalbumine ou une protéine laitière partiellement hydrolysée à base de caséinate.

6. Biscuit selon la revendication 1 ou 5, dans lequel on utilise 1 à 5 % en poids de protéine foisonnante par rapport au poids total humide du liant.

7. Biscuit selon la revendication 1, dans lequel le liant comprend également un agent texturant, épaississant ou gélifiant choisi parmi la gélatine et un substitut de gélatine.

8. Biscuit selon la revendication 7, dans lequel on utilise un mélange de gomme xanthane, de carraghénanne iota et d'amidon en tant que substitut de gélatine.

9. Biscuit selon la revendication 7 ou 8, dans lequel l'agent texturant est utilisé à raison de 0,5 à 2 % en poids, par rapport au poids total humide du liant.

10. Confiserie glacée composite comprenant un biscuit selon l'une des revendications 1 à 9 en contact avec une masse de confiserie glacée.

11. Confiserie glacée composite selon la revendication 10, du genre des bâtonnets glacés, des barres ou des portions en forme de tranches composites de type cassata ou de domes, dans lesquels le biscuit constitue le coeur ou l'enrobage.

12. Confiserie glacée composite selon la revendication 10, du genre des gâteaux constitués de couches superposées alternées de biscuit et de confiserie glacée.

13. Confiserie glacée composite selon la revendication 12, dans laquelle le gâteau présente sur sa face supérieure et/ou sur ses flancs des éléments décoratifs, qui sont constitués par la masse de confiserie glacée elle-même.

14. Confiserie glacée composite selon la revendication 10, contenant des annexes et/ou des enrobages en composition grasse, en chocolat ou en couverture ou en composition sucrée pour glaçage, aromatisée et colorée conférant un contraste visuel et gustatif avec la masse de confiserie glacée.

15. Procédé de fabrication d'un biscuit reconstitué extrudable à température négative dans lequel:
On mélange dans de l'eau successivement ou ensemble les agents de texture, les hydrates de carbone que l'on chauffe jusqu'à dissolution et que l'on pasteurise,
On ajoute au mélange précédent une protéine foisonnante, et dans le cas d'une protéine foisonnante d'origine laitière, cette adjonction peut être réalisée avant la pasteurisation, de manière à réaliser un liant de dispersion,
On congèle et on foisonne le liant de dispersion dans un freezer et
On incorpore au liant congelé et foisonné une masse de biscuit sec ou à pâte molle refroidie et découpée en morceaux.

16. Procédé de fabrication d'une confiserie glacée composite selon la revendication 10, dans lequel on assemble le biscuit avec la confiserie glacée par co-extrusion ou par extrusion successive de couches ou de zones de biscuit et de confiserie glacée, puis on découpe le boudin assemblé en portions.

17. Procédé selon la revendication 16, dans lequel on décore la confiserie glacée composite sur la bande assemblée continue en même temps que l'extrusion avant découpe des portions ou sur les portions découpées.

## Claims

1. Reconstituted biscuit extrudable at negative temperatures, **characterized in that** it comprises:
pieces of baked biscuit of the dry or soft-paste type which have been deep-frozen beforehand, and
a binder for dispersing said biscuit pieces in the form of an expanded meringue comprising an expanding protein selected from egg white, egg white substitutes of dairy origin and carbohydrates, said binder having been frozen at a negative temperature ranging from -3°C to -8°C,
and **in that** the mixture of biscuit pieces and dispersing binder has an overrun of 80 to 150%.

2. Biscuit according to Claim 1 in which the biscuit pieces are particles whose statistical distribution is such that at least about 60% of these particles have a mean diameter of the sphere in which they are inscribed of between 1 and 4 mm, and preferably at least 90% thereof have a mean sphere diameter of between 1 and 3 mm.

3. Biscuit according to Claim 1 in which the carbohydrates forming part of the composition of the dispersing binder are selected from the group comprising sucrose, maltodextrin and glucose syrup, preferably used in a mixture.

4. Biscuit according to Claim 3 in which the binder comprises from 20 to 30 wt.% of sucrose and about 8 to 15 wt.% of glucose syrup, based on the total wet weight.

5. Biscuit according to Claim 1 in which the dispersing binder contains an expanding protein selected from a whey protein isolate rich in alpha-lactalbumin, and a partially hydrolysed dairy protein based on caseinate.

6. Biscuit according to Claim 1 or 5 in which 1 to 5 wt.% of expanding protein is used, based on the total wet weight of the binder.

7. Biscuit according to Claim 1 in which the binder also comprises a texturizing agent, thickener or gelling agent selected from gelatin and a gelatin substitute.

8. Biscuit according to Claim 7 in which a mixture of xanthan gum, iota-carrageenan and starch is used as the gelatin substitute.

9. Biscuit according to Claim 7 or 8 in which the texturizing agent is used in an amount of 0.5 to 2 wt.%, based on the total wet weight of the binder.

10. Composite frozen confectionery product comprising a biscuit according to one of Claims 1 to 9 in contact with a frozen confectionery mass.

11. Composite frozen confectionery product according to Claim 10 such as frozen sticks, bars or portions in the form of composite slices of the cassata type or in the form of domes, in which the biscuit constitutes the core or the coating.

12. Composite frozen confectionery product according to Claim 10 such as cakes consisting of alternate superimposed layers of biscuit and frozen confectionery product.

13. Composite frozen confectionery product according to Claim 12 in which, on its top face and/or its sides, the cake has decorative elements consisting of the frozen confectionery mass itself.

14. Composite frozen confectionery product according to Claim 10 containing attached parts and/or coatings in the form of a fatty composition - chocolate or topping - or of a flavoured and coloured, sweet icing composition, providing a visual and gustatory contrast to the frozen confectionery mass.

15. Process for the manufacture of a reconstituted biscuit extrudable at negative temperatures, in which:
the texturizing agents and the carbohydrates are mixed successively or together in water, heated until they dissolve, and pasteurized,
an expanding protein is added to the above mixture to produce a dispersing binder, it being possible, in the case of an expanding protein of dairy origin, for this addition to be effected before pasteurization,
the dispersing binder is deep-frozen and expanded in a freezer, and
a mass of dry or soft-paste biscuit, cooled and cut into pieces, is incorporated into the expanded, deep-frozen binder.

16. Process for the manufacture of a composite frozen confectionery product according to Claim 10, in which the biscuit and the frozen confectionery product are combined by coextrusion or by the successive extrusion of layers or zones of biscuit and frozen confectionery product, after which the cylinder of combined products is cut into portions.

17. Process according to Claim 16 in which the composite frozen confectionery product is decorated on the conveyor belt as it is being extruded, either before or after it is cut into portions.

## Patentansprüche

1. Bei Minustemperatur extrudierbares, rekonstituiertes Gebäck, **dadurch gekennzeichnet, daß** es folgendes umfaßt:
Stücke von trockenem Gebäck oder von Gebäck mit weichem Teig, die zuvor tiefgefroren wurden, und
ein Dispersionsbindemittel für diese Gebäckstücke in Form eines aufgeschlagenen Baiser, das ein aufschäumbares Protein, das aus Eiweiß und Eiweißersatz auf Milchbasis ausgewählt ist, und Kohlenhydrate enthält und auf eine Minustemperatur von -3°C bis -8°C tiefgefroren ist, und
daß die Mischung aus Gebäckstücken und Dispersionsbindemittel einen Aufschlag von 80 bis 150% hat.

2. Gebäck nach Anspruch 1, bei dem die Gebäckstücke Teilchen sind, die eine solche statistische Verteilung aufweisen, daß etwa mindestens 60 % dieser Teilchen einen mittleren Durchmesser der Kugel, von der sie umschrieben sind, von 1 bis 4 mm aufweisen und vorzugsweise mindestens 90 % von diesen einen mittleren Kugeldurchmesser von 1 bis 3 mm aufweisen.

3. Gebäck nach Anspruch 1, bei dem die in der Zusammensetzung des Dispersionsbindemittels enthaltenen Kohlenhydrate aus der Gruppe ausgewählt sind, die aus Saccharose, Maltodextrin und Glucosesirup besteht, die vorzugsweise in Mischung verwendet werden.

4. Gebäck nach Anspruch 3, bei dem das Bindemittel 20 bis 30 Gew.-% Saccharose und etwa 8 bis 15 Gew.-% Glucosesirup, bezogen auf das Gesamtfeuchtgewicht, enthält.

5. Gebäck nach Anspruch 1, bei dem das Dispersionsbindemittel ein aufschäumbares Protein enthält, das aus einem an α-Lactalbumin reichen Molkenproteinisolat oder einem partiell hydrolysierten Milchprotein auf Caseinatbasis ausgewählt ist.

6. Gebäck nach Anspruch 1 oder 5, bei dem man 1 bis 5 Gew.-% aufschäumbares Protein, bezogen auf das Gesamtfeuchtgewicht des Bindemittels, verwendet.

7. Gebäck nach Anspruch 1, bei dem das Bindemittel ferner ein Textur-, Verdickungs- oder Geliermittel enthält, das aus Gelatine und Gelatineersatz ausgewählt ist.

8. Gebäck nach Anspruch 7, bei dem man eine Mischung von Xanthangummi, ℩-Carrageenan und Stärke als Gelatineersatz verwendet.

9. Gebäck nach Anspruch 7 oder 8, bei dem das Texturmittel in einer Menge von 0,5 bis 2 Gew.-%, bezogen auf das Gesamtfeuchtgewicht des Bindemittels, verwendet wird.

10. Verbund-Eiskonfekt, umfassend ein Gebäck nach einem der Ansprüche 1 bis 9 in Kontakt mit einer Eiskonfektmasse.

11. Verbund-Eiskonfekt nach Anspruch 10 in Form von Eisstäben, Riegeln oder Portionen in Form von Verbundscheiben vom Typ Cassata oder von Halbkugeln, bei denen das Gebäck den Kern oder die Hülle bildet.

12. Verbund-Eiskonfekt nach Anspruch 10 vom Typ Kuchen, die aus übereinander gelegten Schichten abwechselnd aus Gebäck und Eiskonfekt bestehen.

13. Verbund-Eiskonfekt nach Anspruch 12, bei dem der Kuchen auf seiner Oberseite und/oder auf seinen Seitenflächen Dekorationselemente aufweist, die von der Eiskonfektmasse selbst gebildet werden.

14. Verbund-Eiskonfekt nach Anspruch 10, das Zusätze und/oder Umhüllungen aus einer fetten Zusammensetzung, aus Schokolade oder aus Kuvertüre oder aus gefärbter und aromatisierter gezuckerter Eiszusammensetzung enthält, die einen optischen und geschmacklichen Kontrast zur Eiskonfektmasse bildet.

15. Verfahren zur Herstellung eines bei Minustemperatur extrudierbaren rekonstituierten Gebäcks, bei dem
man in Wasser nacheinander oder zusammen die Texturmittel, die Kohlenhydrate mischt, bis zur Auflösung erhitzt und pasteurisiert,
man dieser Mischung ein aufschäumbares Protein zusetzt, wobei dieser Zusatz im Fall eines aufschäumbaren Proteins auf Milchbasis vor der Pasteurisierung vorgenommen werden kann, so daß ein Dispersionsbindemittel hergestellt wird,
man das Dispersionsbindemittel in einem Freezer tiefgefriert und aufschlägt und
man in das tiefgefrorene und aufgeschlagene Bindemittel eine gekühlte und in Stücke geschnittene Masse aus hartem Gebäck oder aus Gebäck mit weichem Teig einarbeitet.

16. Verfahren zur Herstellung von Verbund-Eiskonfekt nach Anspruch 10, bei dem man das Gebäck mit dem Eiskonfekt durch Koextrusion oder aufeinanderfolgende Extrusion von Schichten oder Zonen aus Gebäck und Eiskonfekt zusammenfügt und dann den zusammengefügten Strang in Portionen schneidet.

17. Verfahren nach Anspruch 16, bei dem man das Verbund-Eiskonfekt auf dem kontinuierlichen zusammengefügten Band gleichzeitig mit der Extrusion vor dem Schneiden der Portionen oder auf den zugeschnittenen Portionen dekoriert.
